# EUROPÄISCHE PATENTSCHRIFT

(11) **EP 1 893 962 B1**
(45) Veröffentlichungstag und Bekanntmachung des Hinweises auf die Patenterteilung: **10.09.2008**
(21) Anmeldenummer: 06743177.5
(22) Anmeldetag: 20.06.2006
(51) Int. Cl.: G01K 5/56

(54) **ELEKTROMECHANISCHE TEMPERATURERFASSUNG FÜR EIN KOCHGERÄT UND VERFAHREN ZUR HERSTELLUNG EINER ELEKTROMECHANISCHEN TEMPERATURERFASSUNG**
ELECTROMECHANICAL TEMPERATURE DETECTION DEVICE FOR A COOKING APPLIANCE AND METHOD FOR PRODUCING AN ELECTROMECHANICAL TEMPERATURE DETECTION DEVICE
SYSTEME DE MESURE ELECTROMECANIQUE DE TEMPERATURES POUR APPAREIL DE CUISSON ET PROCEDE DE PRODUCTION D'UN SYSTEME DE MESURE ELECTROMECANIQUE DE TEMPERATURES

(30) Priorität: 24.06.2005 DE 102005031069
(43) Veröffentlichungstag der Anmeldung: 05.03.2008
(73) Patentinhaber: E.G.O. ELEKTRO-GERÄTEBAU GmbH, 75038 Oberderdingen (DE)
(72) Erfinder: BELZ, Bernhard, 68753 Waghäusel (DE); REICHERT, Willi, 75057 Kürnbach (DE)
(74) Vertreter: Patentanwälte Ruff, Wilhelm, Beier, Dauster & Partner
(86) Internationale Anmeldenummer: PCT/EP2006/005894
(87) Internationale Veröffentlichungsnummer: WO 2007/000265

(56) Entgegenhaltungen:
- EP-A- 0 552 860
- DE-A1- 3 333 645
- US-A- 5 420 398

## Beschreibung

### Anwendungsgebiet und Stand der Technik

Die Erfindung betrifft eine elektromechanische Temperaturerfassung für ein Kochgerät, die wenigstens ein erstes länglich ausgebildetes Fühlerteil und wenigstens ein zweites rinnenartig und/oder rohrartig ausgebildetes Fühlerteil aufweist. Das erste Fühlerteil ist innerhalb des zweiten Fühlerteils zumindest abschnittsweise parallel zu einer Längsachse des zweiten Fühlerteils angeordnet. Das erste Fühlerteil und das zweite Fühlerteil bestehen aus Materialien mit unterschiedlichen thermischen Ausdehnungskoeffizienten und ein Endbereich des ersten Fühlerteils ist in einem Endbereich des zweiten Fühlerteils mit dem zweiten Fühlerteil verbunden Der gegenüberliegende Endbereich des ersten Fühlerteils oder des zweiten Fühlerteils ist mit einer Schaltvorrichtung verbunden. Durch unterschiedliches Ausdehnungsverhalten entsteht eine Relativbewegung, mittels der die Schaltvorrichtung beziehungsweise ein Kontakt betätigt werden kann.

Derartige Temperaturerfassungen sind beispielsweise aus der deutschen Offenlegungsschrift DE 33 33 645 A1 bekannt. Darin ist ein Innenstab beschrieben, der innerhalb eines Außenrohrs angeordnet ist, wobei das Außenrohr fest mit einem Sockel verbunden ist. Innenstab und Außenrohr sind aus Materialien mit unterschiedlichen Ausdehnungskoeffizienten gefertigt, nämlich als Steatitstab und Metallrohr. Das Außenrohr und ein Ende des Innenstabes sind an dem entfernten Ende des Außenrohres miteinander verbunden. Der gegenüberliegende Endbereich des Innenstabes steht mit einer elektrischen Schaltvorrichtung im Innenbereich des Sockels in Eingriff.

Zur Herstellung der Außenrohre müssen diese Rohre von einem Stangenrohrrohmaterial abgeschnitten werden, die Schnittstellen entgratet und die Schnittbereiche auf Rundheit überprüft werden. Bei Rollenrohrrohmaterial kommt noch das Geraderichten der abgeschnittenen Außenrohrrohlinge dazu.

### Aufgabe und Lösung

Der Erfindung liegt die Aufgabe zugrunde, eine elektromechanische Temperaturerfassung bereitzustellen, die einfacher herstellbar ist.

Gelöst wird diese Aufgabe durch eine elektromechanische Temperaturerfassung mit den Merkmalen des Anspruchs 1 sowie durch ein Verfahren zur Erstellung einer elektromechanischen Temperaturerfassung mit den Merkmalen des Anspruchs 10. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht. Manche der nachfolgend aufgezählten Merkmale und Eigenschaften treffen sowohl auf die elektromechanische Temperaturerfassung als auch auf das Verfahren zur Herstellung der elektromechanischen Temperaturerfassung zu. Sie werden teilweise nur einmal beschrieben, gelten jedoch unabhängig voneinander sowohl für die elektromechanische Temperaturerfassung als auch das Verfahren zur Herstellung einer solchen.

Erfindungsgemäß ist vorgesehen, dass das zweite Fühlerteil aus einem Stanzteil aus Flachmaterial besteht und dass das Stanzteil entlang seiner Längsachse wenigstens abschnittsweise so ausgebildet ist, dass es einen Bereich zumindest teilweise umschließt. Die Verwendung von Flachmaterial erlaubt es, einfach und in kurzer Zeit große Mengen von Rohlingen für das zweite Fühlerteil herzustellen, die ohne nennenswerte weitere Vorbehandlungen der Rohlinge zum zweiten Fühlerteil weiterverarbeitet werden können. Die Verwendung von Flachmaterial vereinfacht außerdem die Lagerung des Rohmaterials. Das Flachmaterial kann dabei plattenartig und/oder bandartig ausgebildet sein. Das Stanzteil kann selbstverständlich neben Stanzen auch durch andere Verfahren in Form geschnitten oder gebracht sein.

Um einen Bereich zumindest teilweise zu umschließen, damit eine Lagerung beziehungsweise Führung möglich ist, kann die Ausbildung des Stanzteils verschiedenartig gewählt sein. So kann das Stanzteil beispielsweise U-förmig ausgebildet sein, wobei in dem umschlossenen Bereich, parallel zu den Schenkeln der U-Form, das erste Fühlerteil angeordnet ist. Das zweite Fühlerteil kann ebenfalls aus mehreren gestanzten Streifen bestehen, die parallel zueinander angeordnet sind, eine Mittellängsachse des zweiten Fühlerteils umgeben und an ihren Endbereichen miteinander verbunden sind. Das Stanzteil kann jedoch auch zu einem Rohr und/oder einem Rohrabschnitt wie beispielsweise einer Rinne gebogen werden, wobei es nur eine untergeordnete Rolle spielt, ob das Rohr rund oder eckig ausgebildet ist. Es ist jedoch zu bemerken, dass die Längenausdehnung des zweiten Stanzteils um so gleichmäßiger und verzugfreier ist, je mehr es einen Volumenbereich räumlich einschließt und je weniger Außenkanten das Rohr aufweist.

In einer Ausgestaltung der Erfindung ist das zweite Fühlerteil zumindest abschnittsweise konzentrisch um wenigstens eine Mittellängsachse gebogen. Die rohr- oder rinnenartige Ausbildung des Fühlerteils erlaubt es, das Fühlerteil in bereits vorhandene Aufnahmen für eine Temperaturerfassung einzubringen, wie sie aus dem Stand der Technik bereits bekannt sind und bei denen das zweite Fühlerteil zylinderrohrartig ausgebildet ist. Vorteilhaft ist das zweite Fühlerteil zumindest abschnittsweise zylinderartig ausgebildet. In einer Zylinderform ist die Wärmeausdehnung am gleichmäßigsten und mit dem geringsten Verzug im Bauteil behaftet.

In einer Ausgestaltung der Erfindung ist das zweite Fühlerteil zumindest abschnittsweise mit ellipsenartigem und/oder linsenartigem Querschnitt ausgebildet.Das zweite Fühlerteil kann außerdem zumindest abschnittsweise einen zumindest teilweise prismenartigen Querschnitt aufweisen, insbesondere den Querschnitt eines mehrseitigen Prismas. Die nicht-runde beziehungsweise prismenartige Ausgestaltung des zweiten Fühlerteils erlaubt beispielsweise die verdrehsichere Montage des zweiten Fühlerteils an einem Sockel eines Gehäuses, in dem beispielsweise die Schaltvorrichtung angeordnet ist. In vorteilhafter Ausgestaltung der Erfindung ist der prismenartige Querschnitt dreiseitig oder vierseitig ausgebildet.

In einer Ausgestaltung der Erfindung ist das zweite Fühlerteil zumindest abschnittsweise abgerundet um wenigstens eine Mittellängsachse gebogen und zumindest abschnittsweise prismenartig ausgebildet, insbesondere als mehrseitiges Prisma. Vorzugsweise ist der eine Endbereich des zweiten Fühlerteils prismenartig und der gegenüberliegende Endbereich des zweiten Fühlerteils rund ausgebildet. Das zweite Fühlerteil kann so einerseits verdrehsicher an dem Gehäuse und andererseits in Bohrungen oder bereits vorhandene Ausnehmungen an oder in dem Kochgerät angeordnet werden.

In einer Ausgestaltung der Erfindung ist an einer der Längskanten des Stanzteils wenigstens ein von der im Wesentlichen geraden Längskante abstehender Abschnitt vorgesehen und an einer dieser Längskante gegenüberliegenden Längskante des Stanzteils wenigstens eine mit dem abstehenden Abschnitt korrespondierende Ausnehmung vorgesehen. Die abstehenden Abschnitte können dabei eine eckige, eine runde oder beispielsweise eine pilzartige Form aufweisen. Auch kann eine Mehrzahl abstehender Abschnitte vorgesehen sein, die außerdem beispielsweise wellenförmig ausgebildet sein können. In weiterer Ausgestaltung der Erfindung ist an jeder der Längskanten sowohl wenigstens ein abstehender Abschnitt als auch wenigstens eine mit dem abstehenden Abschnitt korrespondierende Ausnehmung vorgesehen. Vorteilhaft steht der wenigstens eine abstehende Abschnitt nach dem Biegen des Stanzteils mit der mit dem abstehenden Abschnitt korrespondierenden Ausnehmung in Eingriff. Besonders vorteilhaft geht ein Abschnitt mit der korrespondierenden Ausnehmung einen Formschluss ein. Die abstehenden Abschnitte und die mit den abstehenden Abschnitten korrespondierenden Ausnehmungen ermöglichen es, dass das gebogenen Stanzteil mittels der ineinander eingreifenden und einen Formschluss bildenden Abschnitte und Ausnehmungen in seiner gebogenen Form gehalten wird. Eine weitere Sicherung zur Aufrechterhaltung der gebogenen Form kann vorgesehen werden, ist jedoch nicht zwingend erforderlich. Als Formschluss wird hier eine Verbindung verstanden, bei der wenigstens zwei zu verbindende Gegenstände mittels geometrisch korrespondierender Ausformungen ineinander greifen. Der Formschluss bleibt auch dann erhalten, wenn eine Kraftübertragung zwischen den zu verbindenden Gegenständen ausbleibt und/oder unterbrochen wird.

In weiterer Ausgestaltung der Erfindung sind die sich berührenden Längskanten des zweiten Fühlerteils mittels Stoffschluss miteinander verbunden, vorzugsweise miteinander verschweißt. Die Längskanten können jedoch ebenfalls verklebt, verlötet oder mittels jeder anderen stoffschlüssigen und temperaturbeständigen Verbindung miteinander verbunden sein. Diese stoffschlüssige Verbindung der Längskanten stellt zum Einen eine Alternative zur vorbeschriebenen Ausgestaltung des Fühlerteils mit abstehenden Abschnitten und dazu korrespondierenden Ausnehmungen dar. Zum Anderen können aber auch der Stoffschluss und der Formschluss gemeinsam zur Anwendung kommen und der Stoffschluss beispielsweise eine Sicherung des Formschlusses darstellen. Als weitere Alternative sind aufgeschobene Ringe, Klammern odgl. denkbar.

In einer Ausgestaltung der Erfindung ist das Flachmaterial des zweiten Führungsteils ein Blech, vorteilhaft ein Stahlblech. Stahlblech ist besonders deswegen vorteilhaft, da die Verarbeitungsarten und die Eigenschaften des Materials hinreichend bekannt sind. Dabei kann jede zu diesem Zweck geeignete Art der Legierung für das zweite Fühlerteil herangezogen werden. Es kann neben Stahl auch jedes andere zu einem stanzbaren Blech verarbeitbares Material herangezogen werden.

Der Stanzvorgang kann lediglich dazu verwendet werden, das Stanzteil aus dem Rohmaterial herauszutrennen und in Form zu bringen und die Verbindungen herzustellen. Gleiches gilt für den Pressvorgang, wobei da ein bereits bestehendes Stanzteil in eine Form gepresst wird. Es ist jedoch ebenfalls denkbar, dass das erste Fühlerteil während eines kombinierten Stanz-Pressvorgangs mit dem zweiten Fühlerteil in Eingriff gebracht wird.

An die Verbindung zwischen dem ersten Fühlerteil und dem zweiten Fühlerteil werden jedoch keine speziellen Anforderungen gestellt, so dass das erste Fühlerteil auch in einem separaten Arbeitsschritt mit dem zweiten Fühlerteil verbunden werden kann.

Diese und weitere Merkmale gehen außer aus den Ansprüchen auch aus der Beschreibung und den Zeichnungen hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränken die unter diesen gemachten Aussagen nicht in ihrer Allgemeingültigkeit.

### Kurzbeschreibung der Zeichnungen

In den Zeichnungen sind unter anderem verschiedene Ausführungsformen der Erfindung schematisch dargestellt und werden im Folgenden näher erläutert. In den Zeichnungen zeigen:
- Fig. 1: eine Draufsicht auf ein Kochgerät mit einer möglichen Anordnung erfindungsgemäßer Gegenstände im Kochgerät,
- Fig. 2: eine geschnittene Ansicht einer erfindungsgemäßen Temperaturerfassungsvorrichtung in einem Zustand, in dem die Temperatur unterhalb der Schalttemperatur liegt,
- Fig. 3: eine geschnittene Ansicht einer erfindungsgemäßen Temperatur-erfassungsvorrichtung in bis wenigstens zur Schalttemperatur erwärmten Zustand,
- Fig. 4: eine erste Ausführungsform eines zweiten Fühlerteils als Zuschnitt und im gebogenen Zustand,
- Fig.5: eine zweite Ausführungsform eines zweiten Fühlerteils als Zuschnitt und im gebogenen Zustand,
- Fig.6: eine dritte Ausführungsform eines zweiten Fühlerteils als Zuschnitt und im gebogenen Zustand,
- Fig. 7: eine Draufsicht auf eine vierte Ausführungsform eines zweiten Fühlerteils und eine Ansicht von vorne,
- Fig. 8: eine Vorderansicht eines zweiten Fühlerteils gemäß Fig.7,
- Fig. 9: eine Detailansicht eines Endbereichs des zweiten Fühlerteils in einer ersten Ausführungsform,
- Fig. 10: eine Detailansicht eines Endbereichs des zweiten Fühlerteils in einer zweiten Ausführungsform, und
- Fig. 11: eine Detailansicht eines Endbereichs des zweiten Fühlerteils in einer dritten Ausführungsform.

### Detaillierte Beschreibung der Zeichnungen

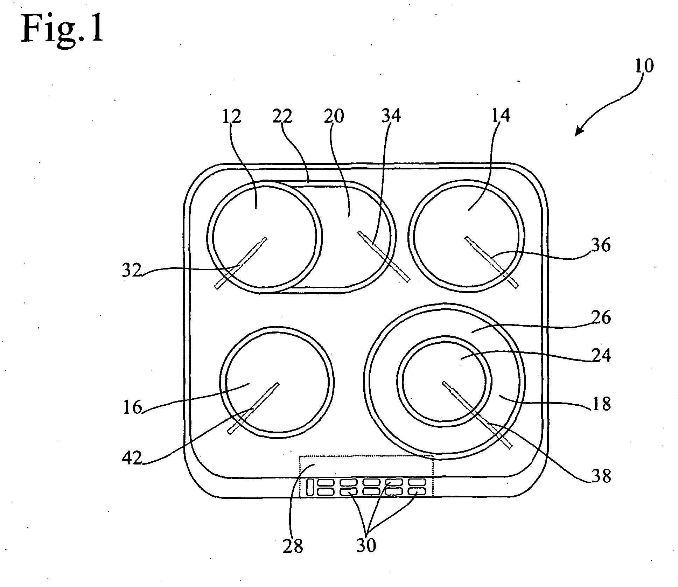

Das in Fig.1 schematisch dargestellte Kochgerät 10 weist mehrere Heizstellen 12, 14, 16, 18 auf, wobei die Heizstelle 12 eine runde Grundform aufweist, zu der eine Heizstellenerweiterung 20 zuschaltbar ist, so dass ein Oval 22 entsteht. Die runde Heizstelle 18 weist einen inneren Heizbereich 24 und einen äußeren Heizbereich 26 auf, wobei der äußere Heizbereich 26 zum inneren Heizbereich 24 zuschaltbar ist. Die Heizstellen 12, 14, 16, 18 sind mittels einer Steuervorrichtung 28 ansteuerbar, wobei die abzugebende Heizleistung mittels beispielhafter Schaltvorrichtungen 30 einstellbar ist.

Im Bereich der Heizstellen 12, 14, 16, 18 sind elektromechanische Temperaturerfassungsvorrichtungen 32, 34, 36, 38, 42 angeordnet, die ein Überhitzen der Heizvorrichtungen der Heizstellen 12, 14, 16, 18 beziehungsweise einer darüber angeordneten Glaskeramikplatte vermeiden. Dabei ist den Heizstellen 12, 14, 16, 18 eine der Temperaturerfassungsvorrichtungen 32, 34, 36, 38, 42 zugeordnet. Die Temperaturerfassungsvorrichtungen 32, 34, 36, 38, 42 sind elektrisch mit der Steuervorrichtung 28 verbunden.

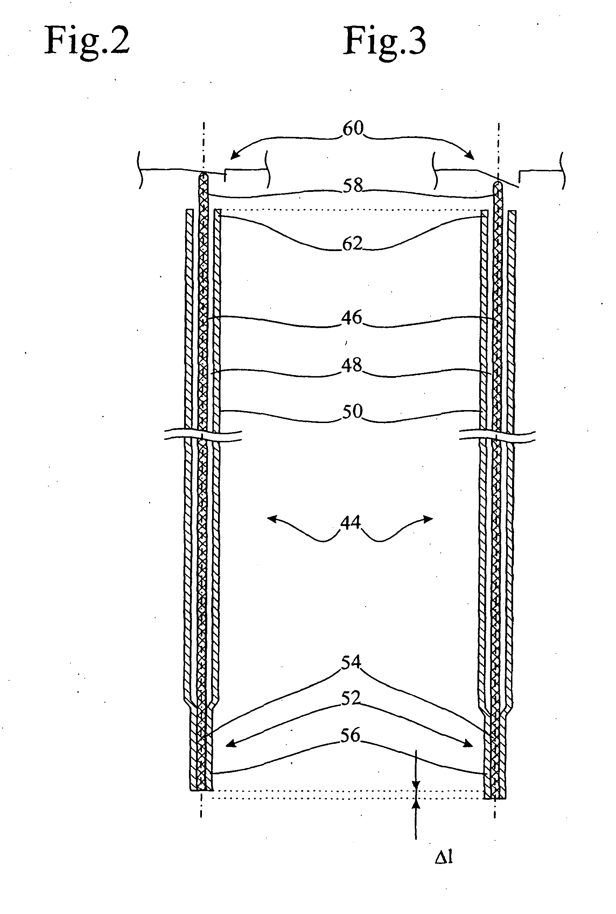

Die elektromechanischen Temperaturerfassungsvorrichtungen 44 weisen dabei den wie in den Fig.2 und Fig.3 dargestellten Aufbau auf. Ein erstes, stabförmiges Fühlerteil 46, das vorzugsweise aus Keramik hergestellt ist, ist in einem Bereich 48 angeordnet, der von einem zweiten Fühlerteil 50 umgeben ist. Das zweite Fühlerteil 50 besteht aus einem Werkstoff, vorzugsweise aus einem Metall, der einen anderen, vorzugsweise größeren Temperaturausdehnungskoeffizienten aufweist als das erste Fühlerteil 46. Ein Endbereich 54 des ersten Fühlerteils 46 und ein Endbereich 56 des zweiten Fühlerteils 50 sind in einem Bereich 52 miteinander in Eingriff gebracht und aneinander fixiert.

Ein Endbereich 58 des ersten Fühlerteils 46, der dem Endbereich 54 gegenüberliegt, ist mit einer Schaltvörrichtung 60 in Eingriff gebracht. Ein Endbereich 62 des zweiten Fühlerteils 50, der dem Endbereich 56 gegenüberliegt ist mit einem nicht dargestellten Sockel beispielsweise an einem nicht dargestellten Gehäuse befestigt.

Das Schaltverhalten bei Temperaturveränderung und Verlängerung des zweiten Fühlerteils um Δl, welches zum Schalten der Schaltvorrichtung 60 führt, ist beispielsweise aus der vorgenannten DE 33 33 645 A1 bekannt.

Die Sicherheits-Schaltgrenze, die hier vornehmlich dazu dient eine Heizstelle eines Kochgeräts vor Überhitzung und daraus hervorgehender Beschädigung oder Zerstörung der Heizstelle des Kochgeräts zu schützen, wird durch die Wahl der verwendeten Materialien und der Dimensionen festgelegt.

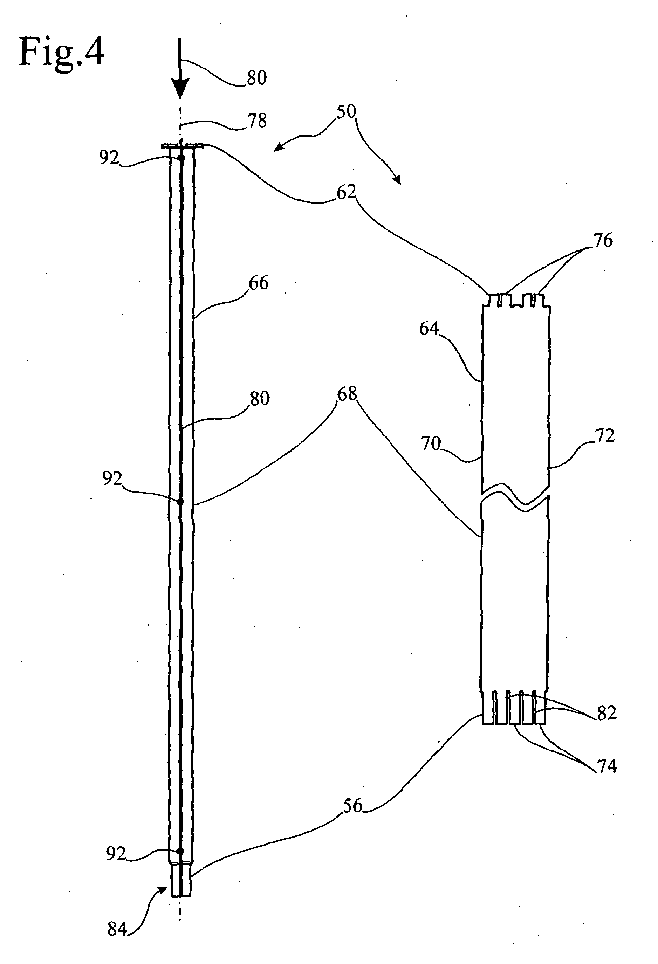

In Fig.4 ist ein zweites Fühlerteil 50 zum Einen als Zuschnitt 64 und zum Anderen als fertiges Bauteil 66 dargestellt, das in einer erfindungsgemäßen elektromechanischen Temperaturerfassungsvorrichtung Verwendung findet. Der Zuschnitt 64 für das zweite Fühlerteil 50 ist aus einem Stanzvorgang hervorgegangen, bei dem die Zuschnitte 64 beispielsweise aus einem Blech oder einem Bandmaterial ausgestanzt werden. Anstelle des Stanzvorgangs kann auch jede anderer Vorgang herangezogen werden, bei dem ein Gegenstand formgebend aus einem Rohmaterial herausgetrennt wird, wie beispielsweise Laserschneiden, Sägen, Fräsen oder Erodieren.

Das zweite Fühlerteil 50 weist einen ersten Endbereich 56, einen zweiten Endbereich 62 und einen Mittelbereich 68 auf. Im Mittelbereich 68 weist das zweite Fühlerteil 50 eine erste Längskante 70 und eine zweite Längskante 72 auf, die im Wesentlichen gerade ausgebildet sind. Weiterhin sind im Endbereich 56 des zweiten Fühlerteils 50 mehrere, im Zuschnitt 64 kammartige Zwischenräume bildend angeordnete, längliche Streifen 74 und im Endbereich 62 mehrere, im Zuschnitt 64 kammartig angeordnete Streifen 76 vorgesehen.

Um aus dem Zuschnitt 64 das zweite Fühlerbauteil 66 zu fertigen, wird der Zuschnitt 64 um eine Mittellängsachse 78 so gebogen, dass sich die Längskanten 70, 72 in einem Nahtbereich 80 berühren und das zweite Fühlerteil 50 ein Volumen einschließt. Dies kann in mehreren Schritten erfolgen. Obwohl das gebogene zweite Fühlerbauteil 66 im gebogenen Zustand eigentlich seine Form beibehält, werden die Längskanten 70, 72 in dem Nahtbereich 80 vorteilhaft beispielsweise mittels Schweißpunkten 92 fixiert.

Die Streifen 76 im Endbereich 62 werden bei dem Biegevorgang, bei dem der Zuschnitt 64 in die Form des Bauteils 66 überführt wird, so gebogen, dass sie senkrecht von der Mittellängsachse 78 abstehen. Dabei sind sie bei Betrachtung aus Pfeilrichtung 80 sternförmig angeordnet, so dass sie als Verankerung in einem Gehäuse herangezogen werden können.

Der Endbereich 56 des zweiten Fühlerteils 50 wird bei dem Biegevorgang oder einem weiteren Bearbeitungsschritt verjüngt, so dass die Zwischenräume 82 zwischen den Streifen 74 geschlossen sind. Mittels der Verjüngung 84 wird das hier nicht dargestellte, erste Fühlerteil am zweiten Fühlerteil 50 ausgerichtet und fixiert.

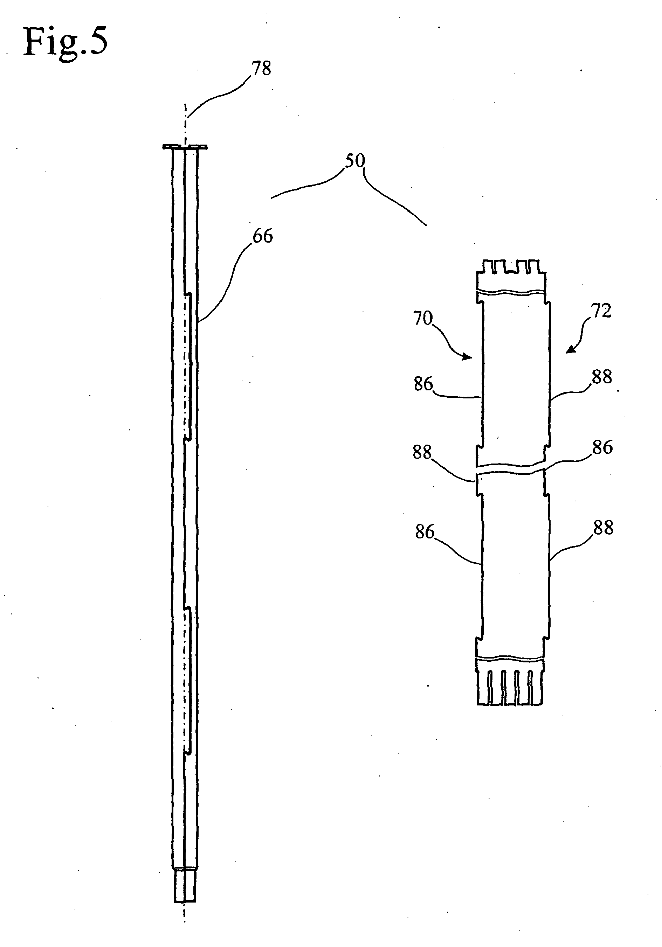

Das in Fig.5 als Zuschnitt 64 beziehungsweise Fühlerbauteil 66 dargestellte Fühlerteil 50 unterscheidet sich dahingehend von dem in Fig.4 dargestellten, dass die Längskanten 70, 72 Ausnehmungen 86 beziehungsweise Vorsprünge 88 aufweisen, wobei die Ausnehmungen 86 mit den Vorsprüngen 88 korrespondierende Form aufweisen. Im dargestellten Beispiel gemäß Fig.5 weisen die Ausnehmungen 86 und Vorsprünge 88 gerundet hinterschnitten ausgebildete Ausformungen auf. Die Ausnehmungen können jedoch auch mit anderen Ausformungen versehen sein, beispielsweise trapezförmig oder wellenförmig.

Beim Biegevorgang um die Mittellängsachse 78 zur Herstellung des Fühlerbauteils 66 werden die Ausnehmungen 86 mit den Vorsprüngen 88 miteinander in Eingriff gebracht und bilden so einen Formschluss. Eine weitere Sicherung der gebogenen Form, beispielsweise mittels Schweißen, ist bei Verwendung der Ausnehmungen 86 bzw. Vorsprünge 88 nicht notwendig, kann jedoch ebenfalls vorgesehen sein.

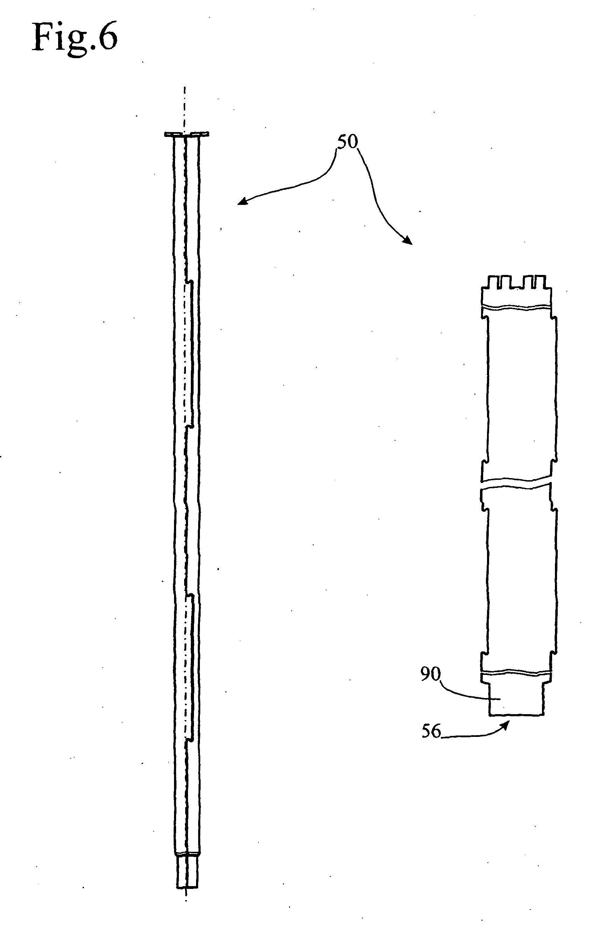

Im Unterschied zu den in Fig.4 und Fig.5 dargestellten zweiten Fühlerteilen 50 weist der Endbereich 56 des zweiten Fühlerteils 50 in Fig.6 keine kammartig Zwischenräume bildenden Streifen sondern lediglich einen plattenartigen Abschnitt 90 auf. Dieser wird jedoch wie die vorstehend beschriebenen Streifen beim Biegevorgang um die Mittellängsachse 78 zu einer Fixierung und Ausrichtung für das erste Fühlerteil ausgebildet.

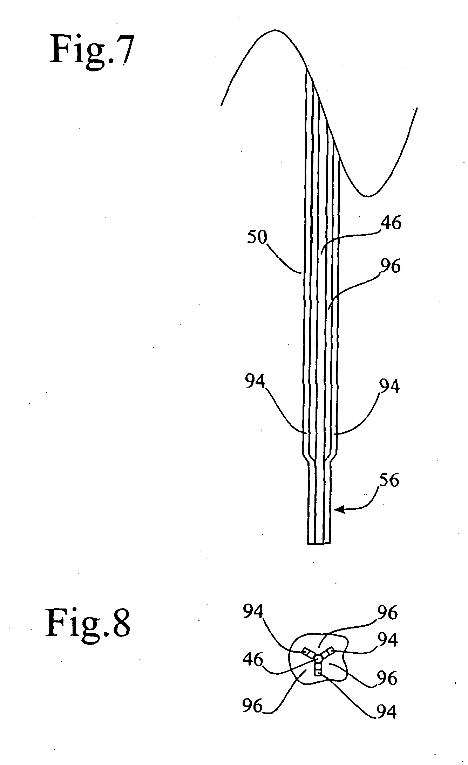

Die Fig.7 zeiget eine weitere schematisch dargestellte Ausführungsform des zweiten Fühlerteils 50, das in der dargestellten Ausführungsform drei vorzugsweise gestanzte Stäben 94 aufweist, die sternförmig und Zwischenräume 96 bildend um das erste Fühlerteil 46 angeordnet sind. Das erste Fühlerteil 46 wird von den Stäben 94 im Endbereich 56 fixiert. Die Fixierung des ersten Fühlerteils 46 geschieht beispielsweise mittels Klemmen, Kleben oder aber jeder anderen möglichen Befestigungsart.

Fig.8 verdeutlicht den sternförmigen Aufbau der Fühlerteile 46, 50 in einer schematischen Vorderansicht der in Fig.7 dargestellten Ausführungsform. Anstatt der drei Stäbe 94, die dann drei Zwischenräume 96 bildend das erste Fühlerteil 46 umgeben, kann auch jede andere Anzahl von Stäben 94 vorgesehen werden.

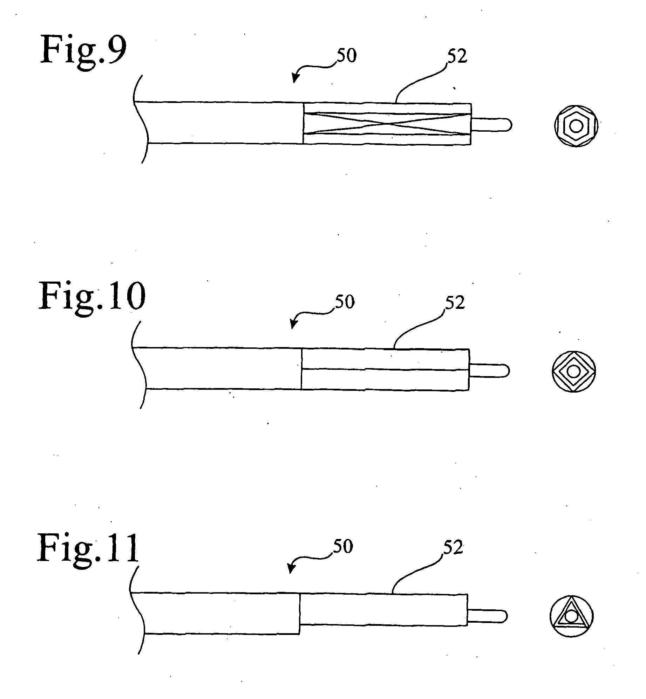

Anstatt der in Bezug auf Fig.4 beschriebenen sternförmigen Ausformung des Endbereichs 52 zur Fixierung des zweiten Fühlerteils 50 am Sockel kann der Endbereich 52 auch noch weitere Ausformungen aufweisen, wie sie beispielhaft in Fig.9, Fig.10 und Fig.11 dargestellt sind. So weist der Endbereich 52 in Fig.9 einen sechseckigen Querschnitt auf, der Endbereich 52 in Fig.10 einen viereckigen Querschnitt und der Endbereich in Fig.11 einen dreieckigen Querschnitt auf. Es ist jedoch auch jede andere Prismenform denkbar. Die Ausformungsmöglichkeiten des Endbereichs 52 sind so gewählt, dass sie eine Verdrehsicherung für das zweite Fühlerteil 50 am Sockel darstellen. Die Ausformungen können gepresst, geschliffen oder einer anderen formgebenden Herstellungsart entsprechend hergestellt werden.

## Patentansprüche

1. Elektromechanische Temperaturerfassung (44) für ein Kochgerät (10), die wenigstens ein erstes länglich ausgebildetes Fühlerteil (46) und wenigstens ein zweites rinnenartig und/oder rohrartig ausgebildetes Fühlerteil (50) aufweist, wobei das erste Fühlerteil (46) innerhalb des zweiten Fühlerteils (50) zumindest teilweise parallel zu einer Längsachse (78) des zweiten Fühlerteils (50) angeordnet ist, wobei das erste Fühlerteil (46) und das zweite Fühlerteil (50) aus Materialien mit unterschiedlichen thermischen Ausdehnungskoeffizienten bestehen und ein Endbereich (54) des ersten Fühlerteils (46) in einem Endbereich des zweiten Fühlerteils (56) mit dem zweiten Fühlerteil (50) verbunden ist und der gegenüberliegende Endbereich (58, 62) des ersten Fühlerteils (46) oder des zweiten Fühlerteils (50) mit einer Schaltvorrichtung (60) verbunden ist, **dadurch gekennzeichnet, dass** das zweite Fühlerteil (50) aus einem Stanzteil (64) aus Flachmaterial besteht, und dass das Stanzteil (64) entlang einer Längsachse (78) wenigstens abschnittsweise so ausgebildet beziehungsweise verformt ist, dass es einen länglichen Bereich (48) mit dem ersten Fühlerteil (46) darin zumindest teilweise umschließt.

2. Elektromechanische Temperaturerfassung nach Anspruch 1, **dadurch gekennzeichnet, dass** das zweite Fühlerteil (50) zumindest abschnittsweise in etwa konzentrisch um eine Mittellängsachse (78) gebogen ist, wobei vorzugsweise das zweite Fühlerteil (50) zumindest abschnittsweise mit rundzylindrischem, ellipsenartigem oder linsenartigem Querschnitt ausgebildet ist.

3. Elektromechanische Temperaturerfassung nach Anspruch 1 oder 2, **dadurch gekennzeichnet, dass** das zweite Fühlerteil (50) zumindest abschnittsweise zylinderartig ausgebildet ist.

4. Elektromechanische Temperaturerfassung nach einem der vorstehenden Ansprüche, **dadurch gekennzeichnet, dass** das zweite Fühlerteil (50) einen zumindest abschnittsweise prismenartigen Querschnitt aufweist, insbesondere als mehrseitiges Prisma.

5. Elektromechanische Temperaturerfassung nach einem der vorstehenden Ansprüche, **dadurch gekennzeichnet, dass** an einer der Längskanten (70, 72) des Stanzteils (64) wenigstens ein von der vorzugsweise im wesentlichen geraden Längskante (70, 72) abstehender Abschnitt (88) vorgesehen ist und dass an einer der Längskante (70, 72) gegenüberliegenden Längskante (70, 72) des Stanzteils (64) wenigstens eine mit dem abstehenden Abschnitt (88) korrespondierende Ausnehmung (86) vorgesehen ist.

6. Elektromechanische Temperaturerfassung nach Anspruch 5, **dadurch gekennzeichnet, dass** an jeder Längskante (70, 72) sowohl wenigstens ein abstehender Abschnitt (88) als auch wenigstens eine mit einem abstehenden Abschnitt (88) korrespondierende Ausnehmung (86) vorgesehen ist.

7. Elektromechanische Temperaturerfassung nach Anspruch 5 oder 6, **dadurch gekennzeichnet, dass** der wenigstens eine abstehenden Abschnitt (88) nach dem Biegen des Stanzteils (64) mit der damit korrespondierenden Ausnehmung (86) in Eingriff steht, wobei sie vorzugsweise einen Formschluss eingehen.

8. Elektromechanische Temperaturerfassung nach einem der vorstehenden Ansprüche, **dadurch gekennzeichnet, dass** sich berührende Längskanten (70, 72) des zweiten Fühlerteils (50) mittels Stoffschluss miteinander verbunden sind, vorzugsweise miteinander verschweißt sind.

9. Elektromechanische Temperaturerfassung nach einem der vorstehenden Ansprüche, **dadurch gekennzeichnet, dass** das Flachmaterial des zweiten Fühlerteils (50) ein Blech ist, vorzugsweise ein Stahlblech.

10. Verfahren zur Herstellung einer elektromechanischen Temperaturerfassung für ein Kochgerät (10), insbesondere nach einem der vorstehenden Ansprüche, wobei die Temperaturerfassung wenigstens ein erstes länglich ausgebildetes Fühlerteil (46) und wenigstens ein zweites rinnenartig und/oder rohrartig ausgebildetes Fühlerteil (50) aufweist, **dadurch gekennzeichnet, dass** ein Stanzteil (64) aus einem Flachmaterial ausgestanzt wird, und dass das Stanzteil (64) parallel zu einer Längsachse (78) so gebogen wird, dass es einen Bereich (48) wenigstens abschnittsweise umgibt und das zweite Fühlerteil (50) bildet.

11. Verfahren nach Anspruch 10, **dadurch gekennzeichnet, dass** an einer der Längskanten (70, 72) des Stanzteils (64) wenigstens ein von der im wesentlichen geraden Längskante (70, 72) abstehender Abschnitt (88) vorgesehen wird, und dass an einer der Längskante (70, 72) gegenüberliegenden Längskante (70, 72) des Stanzteils (64) wenigstens eine mit dem abstehenden Abschnitt (88) korrespondierende Ausnehmung (86) vorgesehen wird.

12. Verfahren nach Anspruch 11, **dadurch gekennzeichnet, dass** der wenigstens eine von der im wesentlichen geraden Längskante (70, 72) abstehende Abschnitt (88) mit einer gegenüberliegenden Ausnehmung (86) der Längskante (70, 72) in Eingriff gebracht wird.

13. Verfahren nach einem der Ansprüche 10 bis 12, **dadurch gekennzeichnet, dass** die Längskanten (70, 72) des gebogenen Stanzteils (64) zumindest abschnittsweise und/oder teilweise stoffschlüssig miteinander verbunden werden, vorzugsweise mittels Schweißen.

14. Verfahren nach einem der Ansprüche 10 bis 13 **dadurch gekennzeichnet, dass** das Stanzteil (64) in eine definierte Form gebogen wird, vorzugsweise rinnenartig, zylinderartig, ellipsenartig, linsenartig oder prismenartig.

15. Verfahren nach einem der Ansprüche 10 bis 14 **dadurch gekennzeichnet, dass** das zweite Formteil (50) in seinem ersten Endbereich (56) kraft- und/oder formschlüssig mit dem ersten Formteil (46) verbunden wird, wobei vorzugsweise der Kraft- und/oder Formschluss durch einen Stanz- und/oder Pressvorgang hergestellt wird.

## Claims

1. Electromechanical temperature detection device (44) for a cooking appliance (10), which has at least one first, elongated sensor part (46) and at least one second, channel-like and/or tubular sensor part (50), the first sensor part (46) within the second sensor part (50) being at least partly parallel to a longitudinal axis (78) of said second sensor part (50), the first sensor part (46) and the second sensor part (50) being made from materials with different thermal expansion coefficients and an end area (54) of the first sensor part (46) in an end area of the second sensor part (56) is connected to the second sensor part (50) and the opposite end area (58, 62) of the first sensor part (46) or the second sensor part (50) is connected to a switching device (60), **characterized in that** the second sensor part (50) comprises a flat material stamped part (64), which along a longitudinal axis (78) is at least zonally so constructed or shaped that it at least partly surrounds an elongated area (48) with the first sensor part (46) therein.

2. Electromechanical temperature detection device according to claim 1, **characterized in that** the second sensor part (50) is at least zonally roughly concentrically bent around a median longitudinal axis (78) and preferably the second sensor part (50) is constructed at least zonally with a circular cylindrical, elliptical or lenticular cross-section.

3. Electromechanical temperature detection device according to claim 1 or 2, **characterized in that** the second sensor part (50) has an at least zonally cylindrical construction.

4. Electromechanical temperature detection device according to one of the preceding claims, **characterized in that** the second sensor part (50) has an at least zonally prismatic cross-section, particularly as a polygonal prism.

5. Electromechanical temperature detection device according to one of the preceding claims, **characterized in that** on at least one of the longitudinal edges (70, 72) of stamped part (64) is provided at least one portion (88) projecting from the preferably substantially straight longitudinal edge (70, 72) and that on a longitudinal edge (70, 72) of the stamped part (64) facing the longitudinal edge (70, 72) is provided at least one recess (86) corresponding to the projecting portion (88).

6. Electromechanical temperature detection device according to claim 5, **characterized in that** on each longitudinal edge (70, 72) is provided both at least one projecting portion (88) and also at least one recess (86) corresponding to a projecting portion (88).

7. Electromechanical temperature detection device according to claim 5 or 6,
**characterized in that**, following the bending of the stamped part (64), the at least one projecting portion (88) is engaged with its corresponding recess (86), so as to preferably provide a positive engagement.

8. Electromechanical temperature detection device according to one of the preceding claims, **characterized in that** contacting longitudinal edges (70, 72) of the second sensor part (50) are integrally joined to one another and are preferably welded to one another.

9. Electromechanical temperature detection device according to one of the preceding claims, **characterized in that** the flat material of the second sensor part (50) is a sheet, preferably a steel sheet.

10. Method for the manufacture of an electromechanical temperature detection device for a cooking appliance (10), particularly according to one of the preceding claims, in which the temperature detection device has at least one first, elongated sensor part (46) and at least one second, channel-like and/or tubular sensor part (50), **characterized in that** a stamped part (64) is stamped from a flat material and that the stamped part (64) is so bent parallel to a longitudinal axis (78) that it at least zonally surrounds an area (48) and forms the second sensor part (50).

11. Method according to claim 10, **characterized in that** on one of the longitudinal edges (70, 72) of stamped part (64) is provided at least one portion (88) projecting from the substantially straight longitudinal edge (70, 72) and that on a longitudinal edge (70, 72) of stamped part (64) facing the first longitudinal edge (70, 72) is provided at least one recess (86) corresponding to the projecting portion (88).

12. Method according to claim 11, **characterized in that** the at least one portion (88) projecting from the substantially straight longitudinal edge (70, 72) is brought into engagement with a facing recess (86) of longitudinal edge (70, 72).

13. Method according to one of the claims 10 to 12, **characterized in that** the longitudinal edges (70, 72) of the bent stamped part (64) are at least zonally and/or partly integrally joined, preferably by welding.

14. Method according to one of the claims 10 to 13, **characterized in that** the stamped part (64) is bent into a defined shape, preferably channel-like, cylindrical, elliptical, lenticular or prismatic.

15. Method according to one of the claims 10 to 14, **characterized in that** in its first end area (56) the second shaped part (50) is positively and/or non-positively joined to the first shaped part (46) and preferably the non-positive and/or positive engagement is brought about by a stamping and/or pressing process.

## Revendications

1. Système électromécanique de mesure de température (44) pour un appareil de cuisson (10), qui présente au moins un premier élément de détecteur (46) oblong et au moins un deuxième élément de détecteur (50) en forme de gouttière et/ou de tube, sachant que le premier élément de détecteur (46) est disposé à l'intérieur du deuxième élément de détecteur (50) au moins en partie parallèlement à un axe longitudinal (78) du deuxième élément de détecteur (50), sachant que le premier élément de détecteur (46) et le deuxième élément de détecteur (50) sont composés de matériaux qui présentent des coefficients d'expansion thermique différents et qu'une zone terminale (54) du premier élément de détecteur (46) est raccordé au deuxième élément de détecteur (50) dans une zone terminale (56) du deuxième élément de détecteur et que la zone terminale opposée (58, 62) du premier élément de détecteur (46) ou du deuxième élément de détecteur (50) est raccordée à un dispositif de coupure du courant (60), **caractérisé en ce que** le deuxième élément de détecteur (50) est constitué à partir d'une pièce estampée (64) en matériau plat et **en ce que** la pièce estampée (64) est réalisée ou encore déformée au moins par sections de manière qu'elle entoure au moins en partie une zone (48) oblongue contenant le premier élément de détecteur (46).

2. Système électromécanique de mesure de température d'après la revendication 1, **caractérisé en ce que** le deuxième élément de détecteur (50) est au moins en partie courbé à peu près de manière concentrique autour d'un axe médian longitudinal (78), sachant que de préférence le deuxième élément de détecteur (50) est au moins partiellement réalisé de manière à présenter une section transversale cylindrique ronde, elliptique ou à lentille.

3. Système électromécanique de mesure de température d'après la revendication 1 ou 2, **caractérisé en ce que** le deuxième élément de détecteur (50) est au moins en partie cylindrique.

4. Système électromécanique de mesure de température d'après une des revendications précédentes, **caractérisé en ce que** le deuxième élément de détecteur (50) présente au moins en partie une section transversale prismatique, notamment prismatique à plusieurs faces latérales.

5. Système électromécanique de mesure de température d'après une des revendications précédentes, **caractérisé en ce qu'**on prévoit à une des arêtes longitudinales (70, 72) de la pièce estampée (64) au moins une section (88) qui saille de l'arête longitudinale (70, 72) de préférence essentiellement rectiligne et **en ce qu'**on prévoit à une arête longitudinale (70, 72) de la pièce estampée (64) opposée à l'arête longitudinale (70, 72) au moins un évidement (86) qui correspond à la section (88) saillante.

6. Système électromécanique de mesure de température d'après la revendication 5, **caractérisé en ce qu'**on prévoit à chaque arête longitudinale (70, 72) non seulement au moins une section (88) saillante, mais aussi au moins un évidement (86) qui correspond à la section (88) saillante.

7. Système électromécanique de mesure de température d'après la revendication 5 ou 6, **caractérisé en ce que** la ou les sections (88) saillantes s'engagent avec l'évidement correspondant (86) après la courbure de la pièce estampée (64), sachant qu'il s'agit de préférence d'une fermeture géométrique.

8. Système électromécanique de mesure de température d'après une des revendications précédentes, **caractérisé en ce que** des arêtes longitudinales (70, 72) adjacentes du deuxième élément de détecteur (50) sont raccordées entre elles au moyen d'un engagement au niveau de substance, de préférence par soudage.

9. Système électromécanique de mesure de température d'après une des revendications précédentes, **caractérisé en ce que** le matériau plat du deuxième élément de détecteur (50) est une tôle, de préférence une tôle d'acier.

10. Procédé de fabrication d'un système électromécanique de mesure de température pour un appareil de cuisson (10), notamment d'après une des revendications précédentes, sachant que le système de mesure de température présente au moins un premier élément de détecteur (46) oblong et au moins un deuxième élément de détecteur (50) en forme de gouttière et/ou de tube, **caractérisé en ce qu'**une pièce estampée (64) est découpée à la matrice à partir d'un matériau plat, et **en ce que** la pièce estampée (64) est courbée parallèlement à un axe longitudinal (78) de manière qu'elle entoure au moins par sections une zone (48) et qu'elle constitue le deuxième élément de détecteur (50).

11. Procédé d'après la revendication 10, **caractérisé en ce qu'**on prévoit à une des arêtes longitudinales (70, 72) de la pièce estampée (64) au moins une section (88) qui saille de l'arête longitudinale (70, 72) de préférence essentiellement rectiligne et **en ce qu'**on prévoit à une arête longitudinale (70, 72) de la pièce estampée (64) opposée à l'arête longitudinale (70, 72) au moins un évidement (86) qui correspond à la section (88) saillante.

12. Procédé d'après la revendication 11, **caractérisé en ce que** la ou les sections (88) qui saillent de l'arête longitudinale (70, 72) essentiellement rectiligne sont mises en prise avec un évidement (86) de l'arête longitudinale (70, 72) situé à l'opposée.

13. Procédé d'après une des revendications de 10 à 12, **caractérisé en ce que** les arêtes longitudinales (70, 72) de la pièce estampée (64) courbée sont raccordées entre elles au moins par sections et/ou en partie par un engagement au niveau de substance, de préférence par soudage.

14. Procédé d'après une des revendications de 10 à 13, **caractérisé en ce que** la pièce estampée (64) est courbée de manière à obtenir une forme bien définie, de préférence une forme de gouttière, de cylindre, d'ellipse, de lentille ou de prisme.

15. Procédé d'après une des revendications de 10 à 14, **caractérisé en ce que** la deuxième pièce préformée (50) est raccordée dans sa première zone terminale (56) à la première pièce préformée (46) par un engagement par adhérence et/ou par un engagement géométrique, sachant que de préférence l'engagement par adhérence et/ou l'engagement géométrique est réalisé par un cycle d'emboutage et/ou d'estampage.
